# EUROPEAN PATENT APPLICATION

(11) **EP 3 293 871 A1**
(43) Date of publication of application: **14.03.2018**
(21) Application number: 16380031.1
(22) Date of filing: 07.09.2016
(51) Int. Cl.: H02K 21/24, H02K 16/00, H02K 11/33, H02K 3/26, B66B 13/08

(54) **ELEVATOR DOOR ACTUATOR**

(71) Applicant: ThyssenKrupp Elevator AG, 45143 Essen (DE); thyssenkrupp AG, 45143 Essen (DE)
(72) Inventor: Morgado, Fernando, 28342 Valdemoro (Madrid) (ES); Vega, Miguel, 19208 Alovera (Guadalajara) (ES); Castillo, Felipe, 28029 Madrid (ES); Marcos, Carlos, 28320 Pinto (Madrid) (ES)
(74) Representative: thyssenkrupp Intellectual Property GmbH

(57) **Abstract**

The invention relates to an elevator door actuator (500) for opening and/or closing an elevator door, with a housing (110,) including an electric motor of the axial flux type with at least one rotor (120, 121), at least one stator (130,131) and a shaft (140), each of the rotors (120, 121) being fixed to the shaft (140) and including a plurality of permanent magnets (125), each of the stators (130) being flat shaped and opposed to one of the two sides of one of the rotors (120), wherein each of the stators (130) includes a printed circuit board forming coil windings (135), and an elevator door system.

## Description

### Field of the invention

The present invention relates to an elevator door actuator including an electric motor and to an elevator door system.

### Background of the Invention

New trends in the elevator industry require improvements of the overall performance of the elevators. Reducing the size of mechanical systems in order to maximize space for passengers inside the elevator car, enhancing the experience for customers by reducing vibrations and noises, inside the car and those transmitted to the whole structure, and improving the energy efficiency of the elevator are some significant examples of the new trends.

Automatic elevator door operators or actuators are conventionally powered by general-purpose radial flux electrical motors that are fed via an external variable frequency inverter. In order to reduce the size of the whole door operator structure, i.e. the frame, it is desirable to minimize the size of all cooperating parts, particularly the volume occupied by the electrical motor and its controller. A further aspect is the improvement of vibration and noise performance and also of energy efficiency of the doors actuators.

Radial-flux type motors are widely used in the elevator door systems and so constitute a mature and well known technology. However, this type of motor has some drawbacks such as low power versus size ratio, low power versus weight ratio and noise and vibration issues.

Radial flux motors have a concentric geometrical structure. They comprise wire windings wound around iron laminations attached to an armature that, when electric current supplied by an external frequency inverter flows through the windings, produces a magnetic field that spins around the shaft and interacts with the constant field of permanent magnets placed in the rotor and parallel to the shaft. Due to the concentric structure of this motor topology, it is difficult to achieve the required decrease in size.

Besides the size issue, the interaction of the constant magnetic field with the steel on the stator produces a so called cogging torque effect, causing noise and vibration that can be amplified when the cogging frequency matches the mechanical resonant frequency of the system.

New motor designs for elevator door actuators are electric motors of the axial flux type with a ring shaped stator and a parallel disc shaped rotor. Armature air core windings are axially arranged and the magnets are perpendicular to the shaft direction with the permanent magnetic flux lines parallel to it. Such an electric motor is known, for example, from EP 1870 990 A2.

Electric motors of the axial flux type have some advantages compared to such of the radial flux type. These advantages are, for example, better power versus size and power versus weight ratios, no cogging torque leading to a smooth operation performance with lower noise and vibration level, higher efficiency due to less iron loss, a peak torque can be several times higher than nominal due to coreless windings, the torque is less dependent on rotational speed and less active material and fewer components are needed,

Despite all cited advantages of electric motors of the axial flux type, they also have some drawbacks such as a higher volume of permanent magnets in comparison with electric motors of the radial flux type and the difficulty of the manufacturing process due to complex stator windings.

In "GAMBETTA, Daniele Morco, 2009, New Design Methodologies for Printed Circuit Axial Field Brushless DC Motors. University of Southern Queensland." the use of printed circuit boards in electric motors is described.

An object of the invention is to provide an elevator door actuator that overcomes at least some of the mentioned disadvantages and in particular is easy in manufacturing and/or small in size and/or weight while having a high power to size and/or weight ratio.

### Disclosure of the invention

According to the invention, an elevator door actuator and an elevator door system with the features of the independent claims are proposed. Advantageous further developments form the subject matter of the dependent claims and of the subsequent description.

An elevator door actuator according to the invention serves for opening and/or closing an elevator door and is provided with a housing including an electric motor of the axial flux type with at least one rotor, at least one stator and a shaft. Each of the rotors is fixed to the shaft and includes a plurality of permanent magnets. The rotors can be, for example, disc shaped for providing a compact geometry and layout. The permanent magnets can be oriented such that the magnetic field produced by the magnets is oriented parallel to the shaft, for example, the magnets can be oriented perpendicularly to the shaft. Advantageously, the permanent magnets comprise neodymium, iron and boron. Such magnets are also called neodymium magnets, are very strong permanent magnets and are thus often used in electric permanent magnet motors. Each of the stators is flat shaped and opposed to one of the two sides of one of the rotors and each of the stators includes a printed circuit board forming coil windings.

The invention eliminates the traditional wire windings of the stators integrating them into a printed circuit board (PCB), thereby mitigating one of the main drawbacks, namely the cumbersome manufacturing process of electric motors of the axial flux type. Preferably, the printed circuit boards comprise FR-4 type materials, i.e. flame retardant materials of a specific type. FR-4 type materials comprise, for example, a composite material composed of woven fiberglass cloth with an epoxy resin binder, and are often used for printed circuit boards.

A further advantage of printed circuit board windings is the flat construction of the stators, in particular compared to conventional wire windings. Thus compact and light elevator door actuators can be provided while maintaining high power to size and power to weight ratios.

In particular, the reduced size in the axial direction of the shaft enables a flat construction of elevator door systems with an elevator door and such an elevator door actuator. Thus the space in an elevator car for passengers can be enhanced. It is to be noted that the suggested elevator door actuator not only overcomes the disadvantages of the conventional electric motors of the axial flux type but also overcomes the disadvantages related to electric motors of the radial flux type mentioned above,

A further advantage of the suggested elevator door actuator is that using printed circuit board stator windings allows for using the well-known design and assembling methods of printed circuit boards used for other applications.

Preferably, the electric motor includes two rotors per stator, each of these two rotors being opposed to different ones of the two sides of the stator, The magnets on the two rotors then should face to each other. This allows for a very efficient distribution of the magnetic flux of the windings in relation to the permanent magnets of the rotor, low magnetic field losses and thus the power to size and the power to weight ratios can be further improved.

As an alternative it is preferred if the electric motor includes two stators per rotor, each of these two stators being opposed to different ones of the two sides of the rotor. This also allows for anefficient distribution of the magnetic flux of the windings in relation to the permanent magnets of the rotor, and thus the power to size and the power to weight ratios can be further improved.

Advantageously, at least one of the printed circuit boards is a multilayer printed circuit board. Preferably, all of the printed circuit boards are multilayer printed circuit boards. This allows for creating a high magnetic flux in the windings while keeping the dimension in the axial direction of the shaft low, and thus the power to size and the power to weight ratios can be further improved.

It is of advantage if the housing further includes an electronic controller for controlling the electric motor and/or a power driver for powering the electric motor. Since an electronic controller and a power driver, for example including an inverter, are needed to operate the elevator door actuator, providing at least one of them within the housing of the elevator door actuator leads to reduced space consumption and thus, for example, helps to enlarge the space available for passengers in an elevator car. It is to be noted that the electronic controller and/or the power driver could also be placed outside of the housing, which could be of advantage for a special configuration or use of the elevator door actuator.

Preferably, at least one of the stators includes a central opening or recess, wherein the electronic controller and/or the power driver are arranged at least partially in the opening or the recess. Since the windings of the stator should be arranged facing the permanent magnets of the rotor, a central, in particular circular, part of the stator and the printed circuit board, respectively, does not have to be printed or provided with windings. Hence this space can be used for arranging at least part of the control and/or drive system necessary to operate the elevator door actuator. This helps to further reduce the size of the elevator door actuator.

Advantageously, the housing includes at least two rotors or two stators. This helps to increase the torque of the elevator door actuator. It is to be noted that to every rotor at least one stator has to be assigned. This also includes, for example, an arrangement of two rotors enclosing one stator. Also, a sequence of alternating rotors and stators is possible. Also, a sequence of arrangements, for example, two or three, each including a rotor enclosed by two stators, is possible. It is to be noted that only one shaft to which all the rotors are fixed is used in these embodiments. Since all of the rotors can be of the same type and also all of the stators can be of the same type, the elevator door actuator is simply scalable in its torque output.

It is of advantage if both ends of the shaft and the housing are arranged such that a first one of the ends can be coupled with a second one of the ends of a further shaft of the same type for torque transmission. This allows for easy stacking of two or more of these elevator door actuators. It is to be noted that the housing has to be arranged in such a way that both ends of the shaft are accessible from outside the housing. Typically, one end of the shaft is used for coupling to a sprocket or the like for operating the elevator door, if a sole elevator door actuator is used. Hence, the other end can be arranged in an appropriate way, for example, by providing an appropriately formed recess in the shaft. Thus, the torque output can simply be scaled by use of several elevator door actuators of the same type.

It is to be noted that scaling the torque output by using a different number or rotors and stators in one elevator door actuator and scaling the torque output by stacking several elevator door actuators are two ways to scale the torque output which can be used independently of each other, however, they also can be combined.

An elevator door system according to the invention includes an elevator door and at least one elevator door actuator according to the invention. The at least one elevator door actuator is coupled to the elevator door for opening and/or closing the elevator door. It is to be noted that one elevator door actuator can be sufficient for a specific application. However, the use of several, for example two or three, elevator door actuators is possible. If several elevator door actuators they can be combined by stacking as explained above. However, separate use of the several elevator door actuators, i.e. laterally displaced actuators, is also possible.

Preferably, the elevator door system is arranged for use in an elevator car, i.e. the elevator door system is part of the elevator car if mounted in an elevator system.

It is also advantageous if the elevator door system is arranged for use in a storey-sided entrance of an elevator system, i.e. the elevator door of the elevator door system is part of a lobby in a story or the like if mounted in an elevator system.

Relating to advantages and further specific embodiments of the elevator door system reference is made to the explanations in respect of the elevator door actuator.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

In the drawings:
- Fig. 1: shows an elevator door actuator according to the invention in a preferred embodiment.
- Fig. 2: shows the elevator door actuator of Fig. 1 in an explosive view.
- Fig. 3: shows an elevator door actuator according to the invention in a preferred embodiment
- Fig. 4: shows an elevator door actuator according to the invention in a further preferred embodiment.
- Fig. 5: shows an elevator door actuator according to the invention in a further preferred embodiment in an explosive view.
- Fig. 6: the elevator door actuator of Fig. 5 in an another view
- Fig. 7: shows an elevator door system according to the invention in a preferred embodiment.
- Fig. 8: shows an elevator door system according to the invention in a further preferred embodiment.
- Fig. 9: shows an elevator door actuator according to the invention in a further preferred embodiment.
- Fig. 10: shows an elevator door actuator according to the invention in a further preferred embodiment.

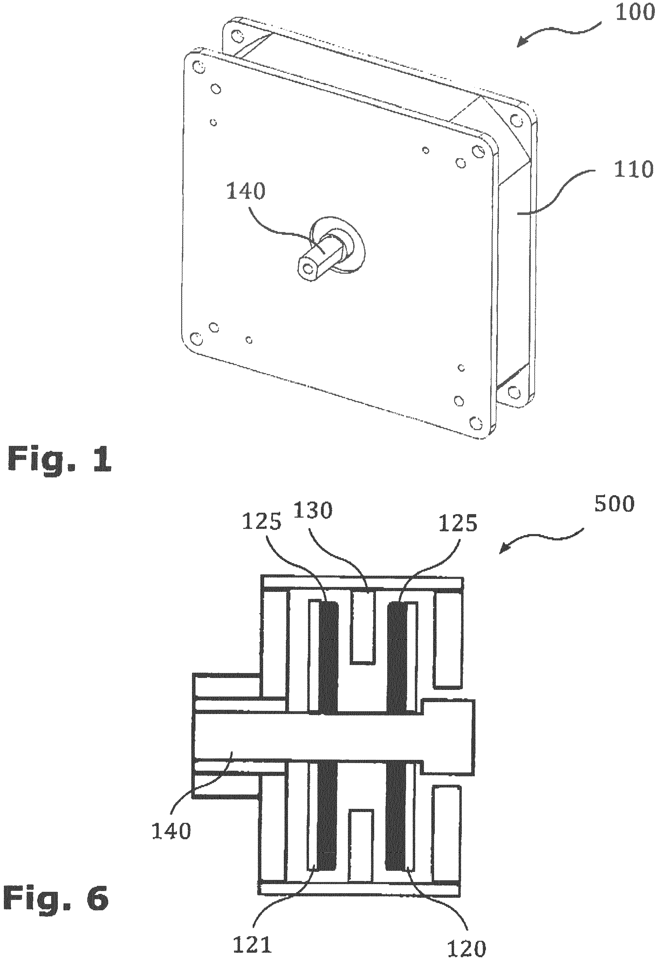

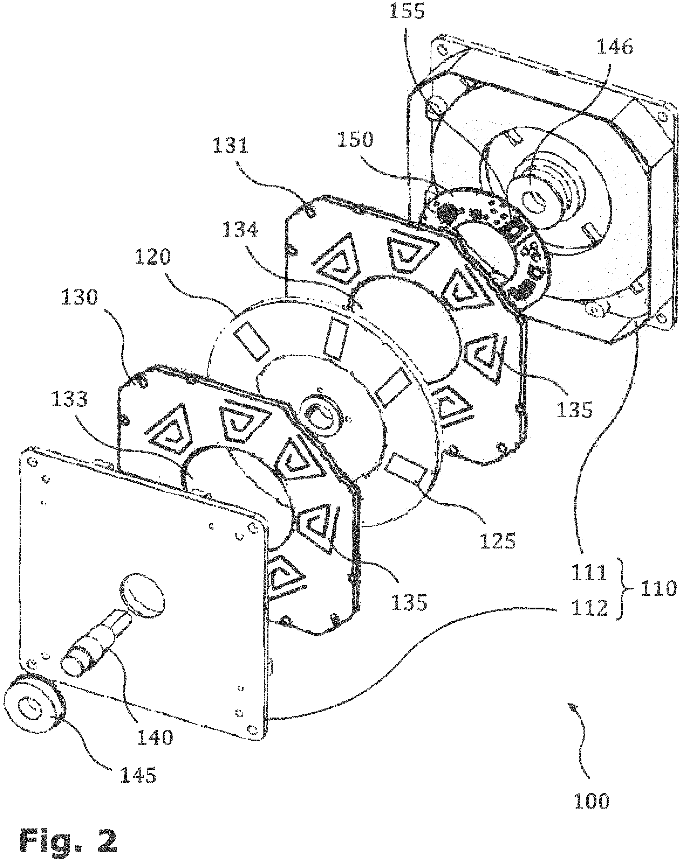

An elevator door actuator according to the invention in a preferred embodiment shall be described using Figs. 1 and 2. In Fig. 1 an elevator door actuator 100 with its housing 110 in a closed state of housing 110 is shown. Only a shaft 140 protrudes through an appropriate opening in housing 110. Shaft 140 can be arranged to fit, for example to a sheave or a sprocket in order to couple to a corresponding elevator door and/or an actuating mechanism in order to open and/or close the elevator door.

In Fig. 2 elevator door actuator 100 is depicted in an explosive view with showing a first housing part 111 and a second housing part 112 forming housing 110. Further, two stators 130 and 131 are shown enclosing a rotor 120 and each of the stators comprising a central opening 133 and 134, respectively. Rotor 120 includes a plurality of permanent magnets 125 oriented perpendicular to shaft 140. For the sake of convenience only one of the permanent magnets is identified with a reference numeral.

Each of stators 130, 131 includes a printed circuit board forming coil windings 135. For the sake of convenience only two of the windings are identified with reference numerals. Several layers of conductive tracks can be layered in such circuit boards. It is to be noticed that these conductive tracks have to be connected appropriately to form coil windings producing a magnetic field when powered.

Further, shaft 140 is shown to which rotor 120 is fixed in the mounted state of elevator door actuator 100. Shaft 140 is supported rotatably by bearings 145 and 146 in housing part 112 and housing part 111, respectively. Supported shaft 140 with rotor 120 fixed to it and stators 130,131 form an electric motor of the axial flux type.

Further, an electronic controller 150 and a power driver 155 are shown in Fig. 2 which are used for controlling and pvwering the elevator door actuator 100. Power driver 155 could, however, also be mounted and/or provided separately from electronic controller 150. For example, electronic controller 150 could be formed such that it fits into opening 134 of stator 131.

Due to stators 130, 13 comprising printed circuit boards with conductive tracks printed on them forming coil windings, a thin electric motor and elevator door actuator, respectively, are provided that can be used in elevator systems to enlarge, for example, space for passengers in an elevator car.

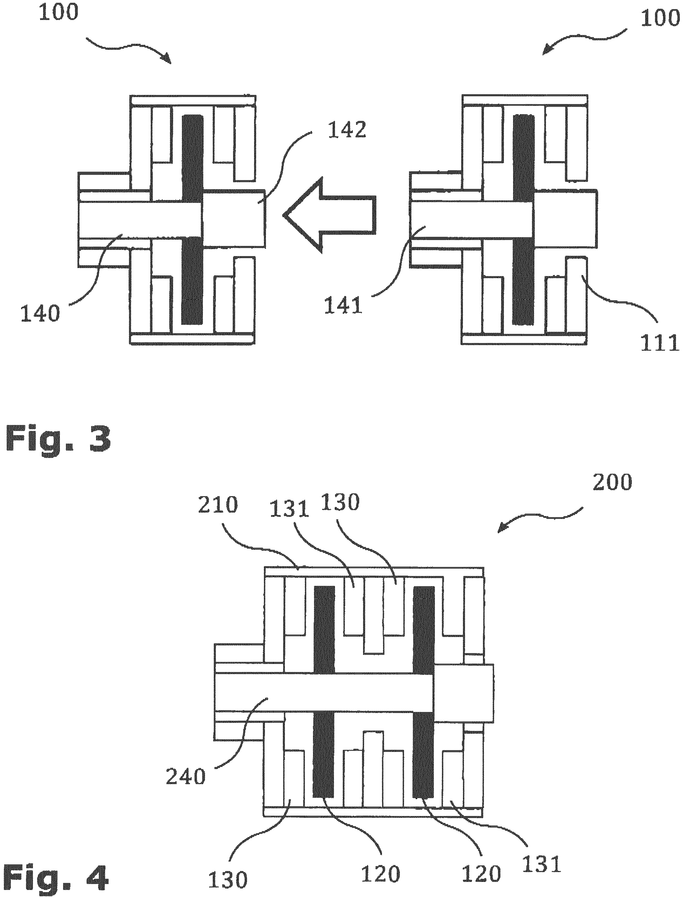

In Fig. 3 two elevator door actuators 100 according to Figs. 1 and 2 are schematically shown in a longitudinal cross section. Each of the shafts 140 includes a first end 141 and a second end 142, which ends are arranged such that first 141 of, for example, elevator door actuator 100 shown on the right can be coupled with second end 142 of, for example, elevator door actuator 100 shown on the left for torque transmission.

While first end 141 can be the end formed to fit to a sprocket or the like as shown in Fig. 1, second end 142 can comprise a recess that fits to first end 141 of a shaft of the same type. It is to be noted that housing part 111 has to comprise an appropriate opening for second end 142 of shaft 140.

In this way two, three or more individual elevator door actuators 100 can be stacked for easily providing an appropriate power and/or torque for a specific use.

In Fig. 4 an elevator door actuator 200 according to a further preferred embodiment is shown in a longitudinal cross section and schematically. Elevator door actuator 200 basically corresponds to elevator door actuator 100, however, including two rotors instead of one rotor and four stators instead of two stators.

While each of rotors 120 and stators 230,131 of elevator door actuator 200 can be of the same type as the rotor and the stators of elevator door actuator 100, shaft 240 and the housing 210 have to be of other and appropriate dimensions in axial direction of the shaft.

In this way power and/or torque of an elevator door actuator can easily be scaled by using an appropriate number of rotors and corresponding stators for a specific use. It is to be noted that shaft 240 of elevator door actuator 200 can, like shaft 140 of elevator door 100 shown in Fig. 3, be arranged to be coupled with another shaft of the same type.

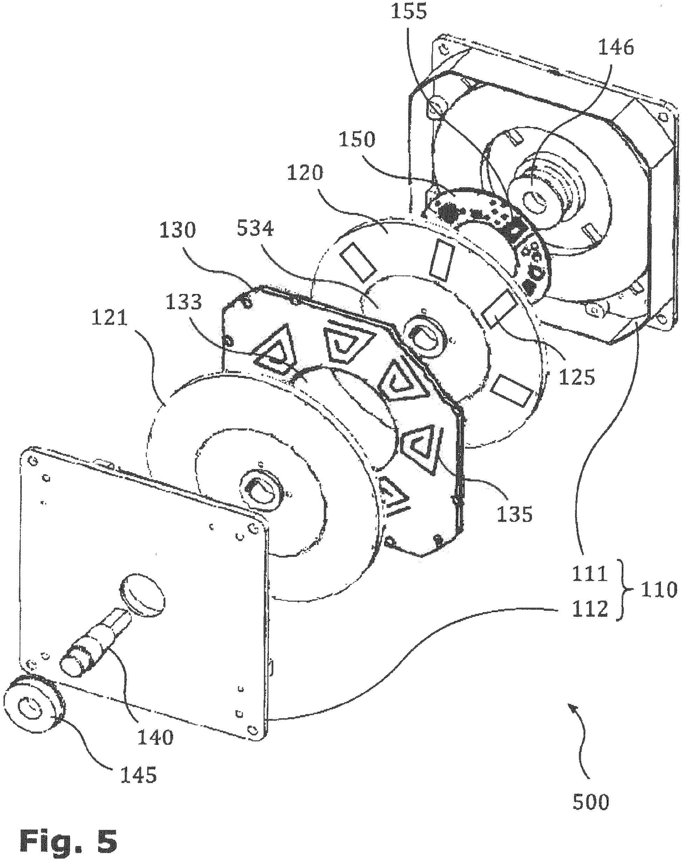

In Fig. 5 an elevator door actuator according to the invention in a further preferred embodiment is shown in an explosive view. Elevator door actuator 500 comprises - in contrast to the embodiment shown in Fig.2 - two rotors 120, 121 and one stator 130 instead of one rotor and two stators.

The single components of elevator door actuator 500 correspond to those ones of elevator door actuator 100. Although the second rotor 121 can be of the same type as rotor 120, rotor 121 is turned around 180° such that its magnets face the magnets 125 of rotor-120. This is the reason why the magnets of rotor 121 cannot be seen in Fig. 5. It is to be noted that stator 130 and/or rotor 120 and/or rotor 121 can include a central opening or recess 534 facing the electronic controller 150. For example, electronic controller 150 could be formed such that it fits into recess 534 of rotor 120.

In Fig. 6 elevator door actuator 500 according to Fig. 5 is shown in a longitudinal cross section and schematically. In this view the magnets 125 of the two rotors 120, 121 facing each other are depicted.

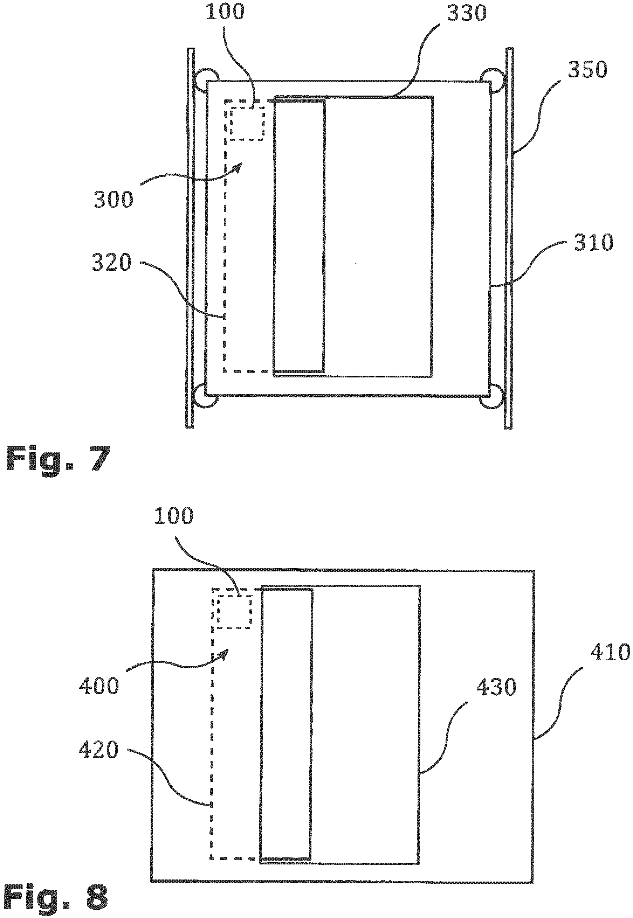

In Fig. 7 an elevator door system 300 according to the invention in a preferred embodiment is shown. Elevator door system 300 includes an elevator door 320 and an elevator door actuator 100. Elevator door 320 is arranged in an elevator car 310 that can travel in an elevator shaft along guide rails 350. Elevator door actuator 100 is used to open and/or close elevator door 320 and thus opening or closing an opening 330 in elevator car 310 providing an entrance for passengers.

In Fig. 8 an elevator door system400 according to the invention in a further preferred embodiment is shown. Elevator door system 400 includes an elevator door 420 and an elevator door actuator 100. Elevator door 420 is arranged in a wall 410 on a story of a building. Elevator door actuator 100 is used to open and/or close elevator door 420 and thus opening or closing an opening in wall 410 providing an entrance 430 for passengers to an elevator car like that shown in Fig. 7.

It is to be noted that also elevator door actuator 500 can be used in elevator door system 300 or 400 instead of elevator door actuator 100.

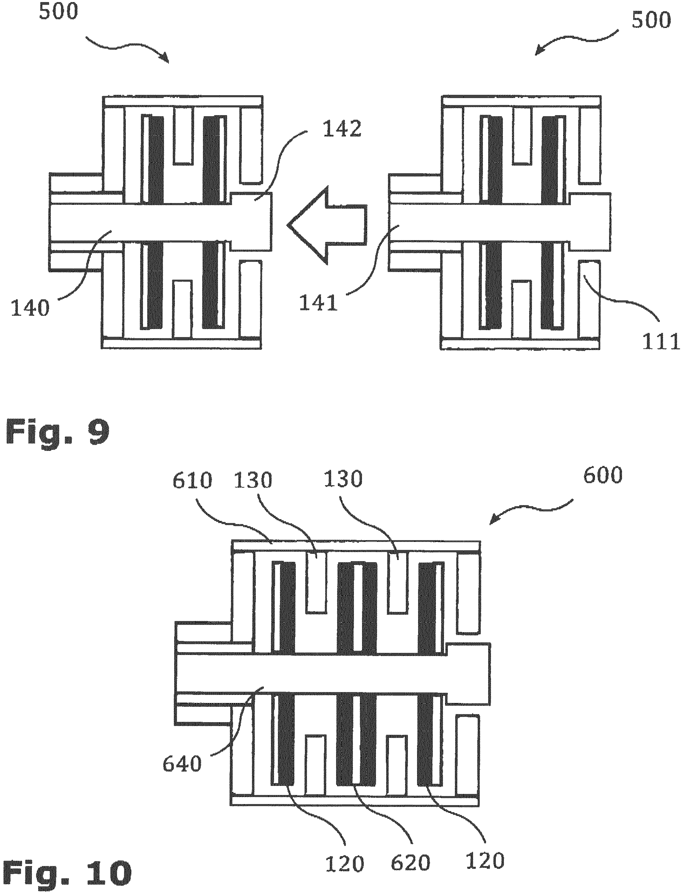

In Fig. 9 two elevator door actuators 500 according to Fig. 6 are schematically shown in a longitudinal cross section. This combination of elevator door actuators corresponds to the one shown in Fig. 3 with the elevator door actuators replaced by such according to Fig. 6. For further description it is referred to Figs. 3 and 6. In this way two, three or more individual elevator door actuators 500 can be stacked for easily providing an appropriate power and/or torque for a specific use.

In Fig. 10 an elevator door actuator 600 according to a further preferred embodiment is shown in a longitudinal cross section and schematically. Elevator door actuator 600 basically corresponds to elevator door actuator 500, however, including three rotors instead of two rotors and two stators instead of one stator.

While each of rotors 120 and stators 130 of elevator door actuator 600 can be of the same type as the rotor and the stators of elevator door actuator 500, shaft 260 and the housing 610 have to be of other and appropriate dimensions in axial direction of the shaft. Further, rotor 620 includes magnets on both sides so as to magnetically interact with both stators 130.

## Claims

1. Elevator door actuator (100, 200, 500, 600) for opening and/or closing an elevator door (320, 420), with a housing (110, 210) including an electric motor of the axial flux type with at least one rotor (120, 121), at least one stator (130, 131) and a shaft (140,240),
each of the rotors (120, 121, 620) being fixed to the shaft (140, 240, 640) and including a plurality of permanent magnets (125),
each of the stators (130,131) being flat shaped and opposed to one of the two sides of one of the rotors (120,121, 620),
**characterized in that** each of the stators (130, 31) includes a printed circuit board forming coil windings (135).

2. Elevator door actuator (500) according to claim 1, the electric motor including two rotors (120,121) per stator (130), each of these two rotors (120, 121) being opposed to different ones of the two sides of the stator (130).

3. Elevator door actuator (100, 200) according to claim 1, the electric motor including two stators (130, 31) per rotor (120), each of these two stators (130, 131) being opposed to different ones of the two sides of the rotor (120).

4. Elevator door actuator (100,200, 500,600) according to any one of the preceding claims, at least one of the printed circuit boards being a multilayer printed circuit board.

5. Elevator door actuator (100, 200, 500, 600) according to any one of the preceding claims, the housing (110, 210, 610) further including an electronic controller (150) for controlling the electric motor and/or a power driver (155) for powering the electric motor.

6. Elevator door actuator (100, 200, 500, 600) according to claim 5, at least one of the stators (130, 131) and the rotors (120, 620) including a central opening (133,134) or recess (534), wherein the electronic controller (150) and/or the power driver (155) are arranged at least partially in the opening (133, 134) or recess (534).

7. Elevator door actuator (100, 200, 500, 600) according to any one of the preceding claims, the permanent magnets (125) comprising neodymium, iron and boron.

8. Elevator door actuator (100, 200, 500, 600) according to any one of the preceding claims, the printed circuit boards comprising FR-4 type material.

9. Elevator door actuator (200, 500, 600) according to any one of the preceding claims, the housing (210) including at least two rotors (120, 620) or two stators.

10. Elevator door actuator (100, 500) according to any one of the preceding claims, both ends (141, 142) of the shaft (140) and the housing (110) being arranged such that a first one (141) of the ends can be coupled with a second one (142) of the ends of a further shaft (140) of the same type for torque transmission.

11. Elevator door system (300, 400) including an elevator door (320, 420) and at least one elevator door actuator (100, 200, 500, 600) according to any one of the preceding claims, the at least one elevator door actuator (100, 200, 500, 600) being coupled to the elevator door (320, 420) for opening and/or closing the elevator door (320, 420).

12. Elevator door system (300) according to claim 11, the system arranged for use in an elevator car (310).

13. Elevator door system (400) according to claim 11, the system arranged for use in a storey-sided entrance (430) of an elevator system.
